# EUROPEAN PATENT SPECIFICATION

(11) **EP 4 394 936 B1**
(45) Date of publication and mention of the grant of the patent: **14.10.2026**
(21) Application number: 22876157.3
(22) Date of filing: 26.09.2022
(51) Int. Cl.: H01M 4/38, C01B 33/02, C01B 33/06, H01M 4/36, H01M 10/0525

(54) **NEGATIVE ELECTRODE MATERIAL POWDER FOR LITHIUM ION BATTERY**
PULVER AUS NEGATIVELEKTRODENMATERIAL FÜR LITHIUM-IONEN-BATTERIE
POUDRE DE MATÉRIAU D'ÉLECTRODE NÉGATIVE POUR BATTERIE AU LITHIUM-ION

(30) Priority: 30.09.2021 JP 2021161675
(43) Date of publication of application: 03.07.2024
(73) Proprietor: Daido Steel Co., Ltd., Nagoya-shi Aichi 461-8581 (JP)
(72) Inventor: SHIMOMURA Kyohei, Nagoya-shi, Aichi 457-8545 (JP); KIMURA Yuta, Nagoya-shi, Aichi 457-8545 (JP)
(74) Representative: Diehl & Partner
(86) International application number: PCT/JP2022/035798
(87) International publication number: WO 2023/054290

(56) References cited:
- WO-A1-2017/082369
- JP-A- 2005 209 496
- JP-A- 2013 084 549
- JP-A- 2020 126 835
- JP-A- 2020 126 835
- US-A1- 2013 084 498
- US-A1- 2018 261 837

## Description

### TECHNICAL FIELD

This invention relates to a negative electrode material powder for a lithium ion battery.

### BACKGROUND ART

A lithium ion battery has an advantage of being able to miniaturize with a high capacity and a high voltage, and has been widely used as a power supply for mobile phones and laptops. In recent years, it has attracted much expectations as a power supply for power applications such as electric vehicles and hybrid vehicles, and the development thereof has been actively promoted.

In the lithium ion battery, lithium ions (hereinafter may be referred to as Li ions) move between a positive electrode and a negative electrode for charging and discharging. On a negative electrode side, Li ions are occluded in a negative electrode active material during charging, and Li ions are released from the negative electrode active material during discharging.

In the related art, lithium cobaltate (LiCoO₂) is generally used as an active material on a positive electrode side, and graphite is widely used as the negative electrode active material. However, graphite as the negative electrode active material has a theoretical capacity of only 372 mAh/g, and an increased capacity has been desired.
Patent Literature 2 discloses a negative electrode active material including an Si-Sn-Fe-Cu based alloy in which the Si phase is dispersed in a matrix phase, which in turn contains an Si-Fe compound phase crystallized around the Si phase, and further contains an Sn-Cu compound phase crystallized around the Si phase and the Si-Fe compound phase.
Patent Literature 3 discloses another negative electrode active material including a Si phase, a Si-Zr compound phase, and a Sn-X compound phase, wherein X is one or more of Cu, Ti, Co, Fe, Ni, and Zr.

### CITATION LIST

### PATENT LITERATURE

Patent Literature 1: JP 2017-224499 A
Patent Literature 2: US 2013/084498 A1
Patent Literature 3: JP 2020-126835 A

### SUMMARY OF INVENTION

### TECHNICAL PROBLEM

As an alternative to a carbon-based electrode material, a metal material such as Si that can be expected to have an increased capacity has been studied. Si has a theoretical capacity of 4198 mAh/g. However, since Si causes occlusion of Li ions by an alloying reaction with Li, Si has large volume expansion and contraction along with occlusion and release of the Li ions. Therefore, due to Si particles being cracking or peeled off from a current collector, cycle characteristics, which are capacity maintenance characteristics during repeated charging and discharging, deteriorate.

As means to solve such the problem, it has been proposed to miniaturize Si itself and reduce the expansion amount thereof, or to alloy Si. For example, the above Patent Literature 1 discloses that a Si phase and a Si compound phase are provided in Si-based alloy particles. The Si compound phase is effective in preventing expansion of the Si phase and improving the cycle characteristics.

However, such means for improving the cycle characteristics may decrease initial characteristics of batteries such as an initial discharge capacity and initial Coulombic efficiency, and there is still room for improvement in improving battery characteristics in consideration of the initial characteristics and the cycle characteristics.

The present invention has been made in view of the above circumstances, and an object thereof is to provide a negative electrode material powder for lithium ion battery that can improve battery characteristics in consideration of initial characteristics and cycle characteristics.

### SOLUTION TO PROBLEM

The present invention relates to a negative electrode material powder for lithium ion battery,
containing Si, Sn, an element X, and an element Y and
including a Si phase, a SiX compound phase, and a SnY compound phase in a phase proportion expressed by the following formula (1), in which
the Si phase, the SiX compound phase, and the SnY compound phase are present separately in a separate state, and
when particle diameters of the Si phase, the SiX compound phase, and the SnY compound phase at an integrated value of 50% in the respective particle diameter distribution are respectively defined as average particle diameters mdSi, mdSiX, and mdSnY for the respective phase,
the average particle diameters mdSi, mdSiX, and mdSnY are all within a range of 0.1 µm to 50 µm, and
average particle diameter ratios expressed by mdSi/mdSiX and mdSi/mdSnY are both within a range of 0.1 to 5.0.

   a[Si]-b[SiX]-c[SnY] formula (1)

The element X is at least one element selected from the group consisting of Fe, Ni, Cr, Zr, and Ti,
the element Y is at least one element selected from the group consisting of Cu, Fe, Ni, Cr, Co, Mn, Zr, and Ti, and
in the formula (1), a, b, and c respectively indicate a content (mass%) of the Si phase, the SiX compound phase, and the SnY compound phase, a+b+c = 100, 10 ≤ a ≤ 95, 1 ≤ b ≤ 90, and 0.07 ≤ c ≤ 50.

In the negative electrode material powder for lithium ion battery specified in this way, since the Si phase that expands as occluding Li is present separately and independently from others, i.e., the SiX compound phase and the SnY compound phase, a space that allows expansion of the Si phase tends to be formed around the Si phase. This space serves as a buffer region against the expansion of the Si phase and can prevent collapse of the SiX compound phase that serves as a skeleton in the electrode, and therefore cycle characteristics can be improved.

Here, in the case where the average particle diameter ratio of the Si phase and compound phases, i.e., the SiX compound phase and the SnY compound phase, which are present separately and independently from each other, is excessively small or large, initial characteristics or cycle characteristics of lithium ion battery deteriorate. Therefore, in the present invention, the average particle diameter ratio of the Si phase to the SiX compound phase (mdSi/mdSiX) and the average particle diameter ratio of the Si phase and the SnY compound phase (mdSi/mdSnY) are both set to be within the range of 0.1 to 5.0. More preferably, it is within a range of 0.3 to 3.0. This makes it possible to avoid excessive deterioration of the initial characteristics or the cycle characteristics, and to improve battery characteristics in consideration of the initial characteristics and the cycle characteristics.

Here, in consideration of the balance between the initial characteristics and the cycle characteristics, it is preferable that a, b, and c in the formula (1) are set to 30 ≤ a ≤ 90, 1 ≤ b ≤ 70, and 0.1 ≤ c ≤ 30.

In addition, from the viewpoint of improving the cycle characteristics, it is preferable to use Cu as the element Y.

### BRIEF DESCRIPTION OF DRAWINGS

[FIG. 1] FIG. 1 provides schematic diagrams illustrating a configuration of a negative electrode material powder according to an embodiment of the present invention, in which (A) in FIG. 1 is a schematic diagram of Si alloy particles including a Si phase, a SiX compound phase, and a SnY compound phase, and (B) in FIG. 1 is a schematic diagram of the negative electrode material powder according to the embodiment of the present invention obtained by finely pulverizing the Si alloy particles in (A) in FIG. 1.
[FIG. 2] FIG. 2 is a schematic diagram illustrating an effect of the negative electrode material powder according to the embodiment of the present invention.
[FIG. 3] FIG. 3 is a schematic diagram illustrating an effect of a negative electrode material powder according to another embodiment of the present invention.

### DESCRIPTION OF EMBODIMENTS

Next, a negative electrode material powder for lithium ion battery according to an embodiment of the present invention and a lithium ion battery using the present negative electrode material powder as a negative electrode (hereinafter may be simply referred to as a battery) is specifically described. Note that, "to" indicating a numerical range is used to mean that numerical values written before and after it are included as a lower limit value and an upper limit value.

### 1. Negative Electrode Material Powder

The present negative electrode material powder has Si, Sn, an element X, and an element Y as main constituent elements. Here, the element X is at least one element selected from the group consisting of Fe, Ni, Cr, Zr, and Ti, and the element Y is at least one element selected from the group consisting of Cu, Fe, Ni, Cr, Co, Mn, Zr, and Ti.

Elements other than the main constituent elements, i.e., Si, Sn, the element X, and the element Y, are not included except for inevitable impurities. Examples of elements for the inevitable impurities include nitrogen (N), sulfur (S), phosphorus (P), and oxygen (O). The respective upper limits are N ≤ 0.10 mass%, S ≤ 0.10 mass%, P ≤ 0.10 mass%, and O ≤ 15 mass%.

The present negative electrode material powder includes, as a metal structure, a Si phase, a SiX compound phase, and a SnY compound phase in a phase proportion expressed by the following formula (1).

a[Si]-b[SiX]-c[SnY] formula (1)

In the formula (1), [Si] means the Si phase, [SiX] means the SiX compound phase, and [SnY] means the SnY compound phase. In addition, a, b, and c (a+b+c = 100) respectively indicate the content (mass%) of the Si phase, SiX compound phase, and SnY compound phase. In this example, 10 ≤ a ≤ 95, 1 ≤ b ≤ 90, and 0.07 ≤ c ≤ 50.

Note that, a non-compound Sn (Sn phase) may be included as an impurity as long as its proportion is 5 mass% or less in the entire powder.

The Si phase is a phase that mainly contains Si and occludes Li ions. From the viewpoint that the Li occlusion amount increases, the Si phase is preferably formed of a single phase of Si. However, the Si phase may include inevitable impurities.

In the present negative electrode material powder, the proportion of the Si phase (the value of "a" in the formula (1)) is 10 mass% to 95 mass%, and preferably 30 mass% to 90 mass%. Here, from the viewpoint of obtaining a high initial discharge capacity, the proportion of the Si phase is 10 mass% or more, and preferably 30 mass% or more. In addition, from the viewpoint of obtaining high cycle characteristics, the proportion of the Si phase is 95 mass% or less, and preferably 90 mass% or less.

On the other hand, a SiX compound constituting the SiX compound phase has a poor Li occlusion property and has very little expansion due to a reaction with Li ions. Therefore, the SiX compound phase plays the role of a skeleton that maintains an electrode structure.

The SiX compound may have different characteristics such as a Li occlusion property and conductivity depending on which element is selected as the element X. Fe, Ni, Cr, and Zr as the element X are particularly excellent in low expansion property and high conductivity expected of the SiX compound. In addition, the element X effective in improving initial Coulombic efficiency is Ni and Ti. The element X effective in improving discharge rate characteristics is Ti. In this way, it is preferable to appropriately select the element X according to the desired characteristics.

Note that the SiX compound phase can include only one type of compound, and can also include two or more types of compounds, such as a SiFe compound and a SiNi compound.

On the other hand, a SnY compound constituting the SnY compound phase has a theoretical capacity lower than that of Si and higher than that of the SiX compound. For example, a SiZr compound corresponding to the SiX compound has a theoretical capacity of 100 mAh/g, while the SnY compound has a theoretical capacity of 150 mAh/g to 600 mAh/g. Therefore, in this example, a diffusion path for Li ions is easily ensured through the SnY compound phase. On the other hand, since a degree of expansion of the Sn-Y compound due to the reaction with Li ions is smaller than that of Si or Sn alone, which has high reactivity with Li ions, an adverse influence on the cycle characteristics due to formation of the SnY compound can be reduced.

In particular, a SnCu compound formed in the case where Cu is selected as the element Y has excellent conductivity. It is also effective in improving the cycle characteristics. Therefore, it is preferable that the element Y contains Cu. Note that, this SnY compound phase may also include only one type of compound, or may include two or more types of compounds.

As described above, the SiX compound phase and the SnY compound phase play different roles, and the battery characteristics obtained also change depending on the proportions of these compound phases. The SnY compound phase expands more than the SiX compound phase due to the reaction with Li ions, although the degree of expansion is not so large. Therefore, in the case where the proportion of the SnY compound phase is high and the proportion of the SiX compound phase is low, the cycle characteristics decrease. On the other hand, in the case where the proportion of the SiX compound phase is high and the proportion of the SnY compound phase is low, the initial discharge capacity is low.

In this example, the proportion of the SiX compound phase (the value of "b" in the formula (1)) is 1 mass% to 90 mass%, preferably 1 mass% to 70 mass% or 5 mass% to 90 mass%, more preferably 5 mass% to 70 mass%, and still more preferably 10 mass% to 70 mass%.

Note that, in satisfying a+b+c = 100, in the case where b is 90 mass%, even when a and c take minimum values of 10 mass% and 0.07 mass% respectively, the total of a+b+c is 100.07 mass%, which is more than 100 mass%. This is because of significant figures, and can be regarded as 100 mass%. In the case where it becomes a problem that the total is more than 100 mass%, the upper limit value of b is not 90 mass% but 89.93 mass%. Similarly, in the case where b is 90 mass%, and a and c are respectively 10 mass% and 0.1 mass%, when a+b+c = 100.1 mass% is not allowed, the upper limit value of b is not 90 mass% but 89.9 mass%.

Similarly, for example, in the case where 30 ≤ a ≤ 90, 1 ≤ b ≤ 70, and 0.1 ≤ c ≤ 30, when b is 70 mass% and a and c take minimum values of 30 mass% and 0.1 mass% respectively, the total of a+b+c is 100.1 mass%, which may be regarded as 100 mass% in terms of significant figures. However, in the case where being more than 100 mass% becomes a problem, the upper limit value of b is not 70 mass% but 69.9 mass%.

The proportion of the SiX compound phase (the value of "b" in the formula (1)) is 1 mass% or more, preferably 5 mass% or more, and more preferably 10 mass% or more, from the viewpoint of obtaining high cycle characteristics. In addition, the proportion of the SiX compound phase is 90 mass% or less, in some cases 89.93 mass% or less, preferably 89.9 mass% or less, and more preferably 70 mass% or less, from the viewpoint of obtaining a high initial discharge capacity.

The proportion of the SnY compound phase (the value of "c" in the formula (1)) is 0.07 mass% to 50 mass%, preferably 0.1 mass% to 50 mass%, and more preferably 0.1 mass% to 30 mass%. Here, the proportion of the SnY compound phase (the value of "c" in the formula (1)) is 0.07 mass% or more, and preferably 0.1 mass% or more, from the viewpoint of obtaining a high initial discharge capacity. In addition, the proportion of the SnY compound phase is 50 mass% or less, and preferably 30 mass% or less, from the viewpoint of obtaining high cycle characteristics.

Therefore, the relationship between a indicating the proportion of the Si phase, b indicating the proportion of the SiX compound phase, and c indicating the proportion of the SnY compound phase is 10 ≤ a ≤ 95, 1 ≤ b ≤ 90, and 0.07 ≤ c ≤ 50, and in some cases 10 ≤ a ≤ 95, 1 ≤ b ≤ 89.93, and 0.07 ≤ c ≤ 50, preferably 10 ≤ a ≤ 95, 1 ≤ b ≤ 90, and 0.1 ≤ c ≤ 50, and in some cases 10 ≤ a ≤ 95, 1 ≤ b ≤ 89.9, and 0.1 ≤ c ≤ 50, and more preferably 30 ≤ a ≤ 90, 1 ≤ b ≤ 70, and 0.1 ≤ c ≤ 30, and in some cases, 30 ≤ a ≤ 90, 1 ≤ b ≤ 69.9, and 0.1 ≤ c ≤ 30.

The content of each main element suitable for obtaining the above composition phase in the negative electrode material powder is as follows. Note that in the following description, "%" means "mass%" unless otherwise specified.

The content of Si is preferably 50% to 95%, more preferably 60% to 80%, and still more preferably 73% to 79%. Here, the content of Si is preferably 50% or more, more preferably 60% or more, and still more preferably 73% or more, from the viewpoint of obtaining a high initial discharge capacity. In addition, the content of Si is preferably 95% or less, more preferably 80% or less, and still more preferably 79% or less, from the viewpoint of obtaining good cycle characteristics.

The content of the element X is preferably 1.0% to 38%, more preferably 5.0% to 30%, and still more preferably 13% to 23%. Here, the content of the element X is preferably 1.0% or more, more preferably 5.0% or more, and still more preferably 13% or more, from the viewpoint of obtaining good cycle characteristics. In addition, the content of the element X is preferably 38% or less, more preferably 30% or less, and still more preferably 23% or less, from the viewpoint of obtaining a high initial discharge capacity. Note that, in the case where two or more types of elements are included as the element X, it is preferable that the total content is within the above range.

The content of Sn is preferably 0.7% to 30%, more preferably 1.0% to 10%, and still more preferably 1.5% to 5.0%. Here, the content of Sn is preferably 0.7% or more, more preferably 1.0% or more, and still more preferably 1.5% or more, from the viewpoint of further obtaining the effect as a Li diffusion path. In addition, the content of Sn is preferably 30% or less, more preferably 10% or less, and still more preferably 5.0% or less, from the viewpoint of obtaining good cycle characteristics.

The content of the element Y is preferably 1.0% to 15%, more preferably 1.5% to 10%, and still more preferably 1.5% to 4.0%. Here, the content of the element Y is preferably 1.0% or more, and more preferably 1.5% or more, from the viewpoint of further obtaining the effect as a Li diffusion path. In addition, the content of the element Y is preferably 15% or less, more preferably 10% or less, and still more preferably 4.0% or less, from the viewpoint of obtaining good cycle characteristics. Note that, in the case where two or more types of elements are included as the element Y, it is preferable that the total content is within the above range.

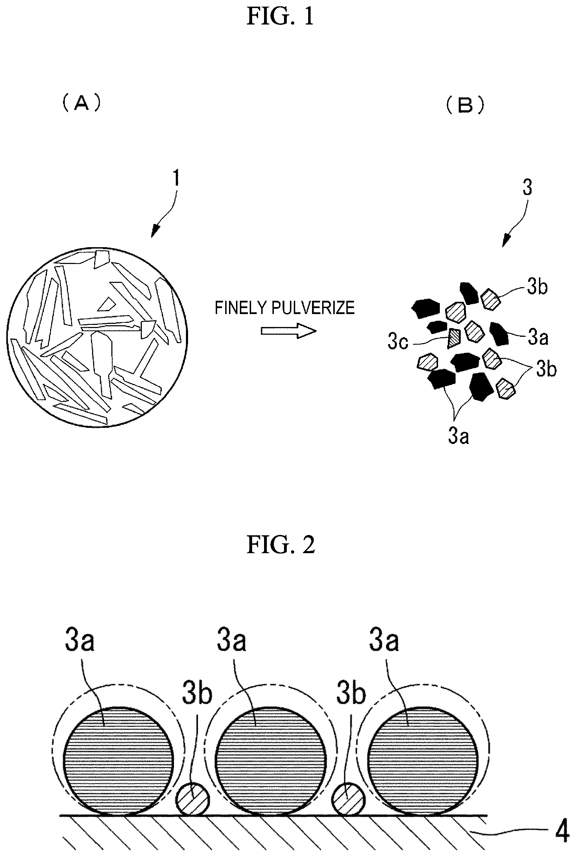

(B) in FIG. 1 illustrates a schematic diagram of a negative electrode material powder 3 according to an embodiment of the present invention, which is obtained by finely pulverizing Si alloy particles including a Si phase, a SiX compound phase, and a SnY compound phase. As illustrated in the figure, in the negative electrode material powder 3, a Si phase 3a, a SiX compound phase 3b, and a SnY compound phase 3c are separately present in a separate state. When average particle diameters of the Si phase 3a, the SiX compound phase 3b, and the SnY compound phase 3c are respectively denoted mdSi, mdSiX, and mdSnY, the average particle diameters mdSi, mdSiX, and mdSnY are all within a range of 0.1 µm to 50 µm, preferably 0.3 µm to 40 µm, and more preferably 0.5 µm to 30 µm. The average particle diameter mdSi is still more preferably 1.0 µm to 20 µm, and particularly preferably 1.0 µm to 10 µm. Here, the average particle diameters mdSi, mdSiX, and mdSnY are all 0.1 µm or more, more preferably 0.5 µm or more, and still more preferably 1.0 µm or more. In addition, the average particle diameters mdSi, mdSiX, and mdSnY are all 50 µm or less, preferably 40 µm or less, and more preferably 30 µm or less. The average particle diameter mdSi is still more preferably 20 µm or less, and particularly preferably 10 µm or less.

Here, the "particle diameter" refers to the diameter of a circle having the same area, that is, the diameter of an equivalent circle, obtained by measuring the area of each phase constituting the present negative electrode material powder under electron microscope observation. In addition, the "average particle diameter" refers to the particle diameter at 50% of the integrated value in the particle diameter distribution, and specifically, an average value analyzed for 100 particles from a cross-sectional SEM image (5000 times) of each powder for the Si phase, the SiX compound phase, and the SnY compound phase.

In the present negative electrode material powder specified in this way, with the refinement, the expansion amount of the Si phase is reduced, and collapse thereof is prevented. In addition, since the Si phase is present independently of others, i.e., the SiX compound phase and the SnY compound phase, a space that allows expansion of Si tends to be formed around the Si phase. This space serves as a buffer region against the expansion of Si and can prevent the collapse of the SiX compound phase that serves as a skeleton in the electrode.

However, as illustrated in FIG. 2, in the case where the particle diameter of the Si phase 3a is excessively larger than that of the SiX compound phase 3b or the SnY compound phase 3c, repeated expansion and contraction of the Si phase 3a causes the electrode to collapse and deteriorates the cycle characteristics. Note that, reference numeral 4 in FIG. 2 denotes a conductive substrate that constitutes a part of the electrode.

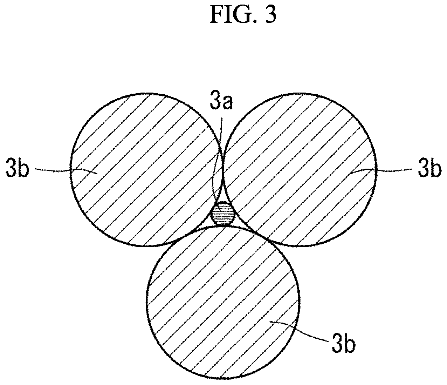

On the other hand, as illustrated in FIG. 3, in the case where the particle diameter of the Si phase 3a is excessively smaller than that of the SiX compound phase 3b or the SnY compound phase 3c, the Si phase 3a is surrounded by the SiX compound phase 3b or the SnY compound phase 3c, which hinders the occlusion and release of Li ions in the Si phase 3a, deteriorating the initial Coulombic efficiency and an initial capacity.

Therefore, in this example, since average particle diameter ratios expressed by mdSi/mdSiX and mdSi/mdSnY are both within a range of 0.1 to 5.0, deterioration of the initial characteristics such as the initial discharge capacity and the initial Coulombic efficiency, and the cycle characteristics is prevented. The average particle diameter ratio is more preferably within a range of 0.3 to 5.0 or 0.1 to 3.0, and still more preferably within a range of 0.3 to 3.0.

Next, an example of a method for producing the present negative electrode material powder is described.

Respective raw materials are weighed out such that a predetermined chemical composition is obtained, and a molten alloy obtained by melting the weighed raw materials by using a melting device such as an arc furnace, a high frequency induction furnace, or a heating furnace is quenched by using an atomization method, to thereby obtain a Si alloy as a quenched alloy.

In the atomization method, a gas such as N₂, Ar, or He is sprayed at a high pressure, for example, 1 MPa to 10 MPa, against the molten alloy that is discharged into an atomization chamber and that continuously (rod-like) flows downward, whereby the molten alloy is pulverized and cooled. The cooled molten alloy approaches a spherical shape while free-falling in the atomization chamber in a semi-molten state, and the Si alloy particles as illustrated in (A) in FIG. 1 for example are obtained. The Si phase, the SiX compound phase, and the SnY compound phase are formed in the structure of the Si alloy particles 1 illustrated in (A) of FIG. 1.

Note that, in the atomization method, high-pressure water may be sprayed instead of the gas from the viewpoint of improving a cooling effect. In some cases, it is also possible to obtain a foiled Si alloy by using a roll quenching method instead of the atomization method.

Next, the obtained Si alloy particles are finely pulverized, whereby as illustrated in (B) in FIG. 1, a negative electrode material powder including the Si phase 3a, the SiX compound phase 3b, and the SnY compound phase 3c, which are present independently in a separate state, is obtained.

Here, in the case where the Si alloy particles 1 are pulverized by a dry pulverization method, as pulverization and agglomeration are repeated, it is difficult to separate the Si phase 3a, the SiX compound phase 3b, and the SnY compound phase 3c from each other, and a powder is formed in which these phases are in close contact with each other. Therefore, in this example, it is preferable to use a wet pulverization method to refine the Si alloy particles.

As the wet pulverization method in this example, a wet pulverization method using a bead mill or a planetary ball mill can be used. In wet pulverization, a solvent is used together with the Si alloy particles to be pulverized. As the solvent, ethanol, methanol, isopropyl alcohol, Naphthesol, and the like can be used. In addition, a dispersant can also be added.

In the case where there is a large difference in the amount (proportion) of the Si phase, SiX compound phase, and SnY compound phase in the Si alloy particles to be pulverized, the pulverization of the phase with a large amount does not progress well, and a difference in particle diameter between the phases tends to occur. However, with Si alloy particles whose chemical composition is adjusted such that Si, the SiX compound and the SnY compound have the above phase proportion, by using the wet pulverization method, it is possible to obtain a negative electrode material powder in which the average particle diameters mdSi, mdSiX, and mdSnY are all within the range of 0.1 µm to 50 µm, and the average particle diameter ratios expressed by mdSi/mdSiX and mdSi/mdSnY are both within the range of 0.1 to 5.0.

Note that, in the production of the present negative electrode material powder, instead of the method of pulverizing the Si alloy particles having the three phases therein, it is also possible to use a method in which Si particles, SiX compound particles, and SnY compound particles are separately formed directly from respective molten metals, these particles are pulverized to a predetermined particle diameter and then mixed.

### 2. Battery

Next, a battery formed by using a negative electrode containing the present negative electrode material powder is described.

The negative electrode includes a conductive substrate and a conductive film laminated on a surface of the conductive substrate. The conductive film contains at least the present negative electrode material powder described above in a binder. The conductive film may also contain a conductive aid, if necessary. In the case where a conductive aid is contained, it is easier to ensure a conductive path for electrons.

In addition, the conductive film may contain an aggregate, if necessary. In the case where an aggregate is contained, expansion and contraction of the negative electrode during charging and discharging can be easily prevented, and collapse of the negative electrode can be prevented, so that the cycle characteristics can be further improved.

The conductive substrate functions as a current collector. Examples of a material thereof include Cu, a Cu alloy, Ni, a Ni alloy, Fe, and a Fe-based alloy. Preferably, it is Cu or a Cu alloy. Examples of a specific form of the conductive substrate include a foil form and a plate form. A foil form is preferred from the viewpoint of reducing the volume of the battery and improving the degree of freedom in form.

As a material of the above binder, for example, a polyvinylidene fluoride (PVdF) resin, a fluorine resin such as polytetrafluoroethylene, a polyvinyl alcohol resin, a polyimide resin, a polyamide resin, a polyamideimide resin, a styrene-butadiene rubber (SBR), or polyacrylic acid can be suitably used. These may be used alone or in combination of two or more thereof. Among these, a polyimide resin is particularly preferred because it has high mechanical strength, can withstand volume expansion of the active material, and effectively prevents the conductive film from peeling off from the current collector due to breakage of the binder.

Examples of the conductive aid include carbon black such as Ketjen black, acetylene black, and furnace black, graphite, carbon nanotubes, and fullerene. These may be used alone or in combination of two or more thereof. Among these, preferably, Ketjen black, acetylene black, or the like can be suitably used from the viewpoint of being easy to ensure electron conductivity.

From the viewpoint of conductivity improvement, electrode capacity, and the like, the content of the conductive aid is in a range of preferably 0 parts by mass to 30 parts by mass, and more preferably 4 parts by mass to 13 parts by mass, with respect to 100 parts by mass of the present negative electrode material powder. In addition, the average particle diameter (d50) of the conductive aid is preferably 10 nm to 1 µm, and more preferably 20 nm to 50 nm, from the viewpoint of dispersibility, ease of handling, and the like.

As the aggregate, a material that does not expand or contract during charging and discharging, or that has very little expansion or contraction can be suitably used. Examples thereof include graphite, alumina, calcia, zirconia, and activated carbon. These may be used alone or in combination of two or more thereof. Among these, preferably, graphite or the like can be suitably used from the viewpoint of conductivity, Li activity, and the like.

From the viewpoint of improving the cycle characteristics, the content of the aggregate is in a range of preferably 10 parts by mass to 400 parts by mass, and more preferably 43 parts by mass to 100 parts by mass, with respect to 100 parts by mass of the present negative electrode material powder. In addition, the average particle diameter of the aggregate is preferably 10 µm to 50 µm, and more preferably 20 µm to 30 µm, from the viewpoint of functionality as an aggregate, control of an electrode film thickness, and the like. Note that the average particle diameter of the aggregate is a value measured by using a laser diffraction/scattering particle diameter distribution analyzer.

The present negative electrode can be produced by, for example, adding necessary amounts of the present negative electrode material powder, and, if necessary, a conductive aid and an aggregate to a binder dissolved in an appropriate solvent to form a paste, applying the paste to a surface of the conductive substrate, followed by drying, and optionally subjecting it to densification, a heat treatment, or the like.

In the case of forming a lithium ion battery using the present negative electrode, there are no particular limitations on a positive electrode, an electrolyte, a separator, and the like, which are basic components of the battery other than the present negative electrode.

Specific examples of the positive electrode include those in which a layer containing a positive electrode active material such as LiCoO₂, LiNiO₂, LiFePO₄, and LiMnO₂ is formed on a surface of a current collector such as an aluminum foil.

Specific examples of the electrolyte include an electrolytic solution in which a lithium salt is dissolved in a non-aqueous solvent. In addition, it is also possible to use a polymer in which a lithium salt is dissolved, a polymer solid electrolyte in which a polymer is impregnated with the above-described electrolytic solution, and the like.

Specific examples of the non-aqueous solvent include ethylene carbonate, propylene carbonate, butylene carbonate, dimethyl carbonate, diethyl carbonate, and methyl ethyl carbonate. These may be used alone or in combination of two or more thereof.

Specific examples of the lithium salt include LiPF₆, LiBF₄, LiClO₄, LiCF₃SO₃, and LiAsF₆. These may be used alone or in combination of two or more thereof.

Other battery components include a separator, a can (battery case), and a gasket. As for these, as long as they are commonly used in a lithium ion battery, any of them can be appropriately combined to form a battery.

Note that the shape of the battery is not particularly limited, and may be any shape such as a cylindrical shape, a rectangular shape, or a coin shape, and can be appropriately selected according to a specific application.

### Examples

Hereinafter, the present invention is described more specifically using Examples. Note that "%" in the alloy composition is "mass%" unless otherwise specified.

### 1. Preparation of Negative Electrode Material Powder

Table 1 below shows alloy compositions of negative electrode material powders, 27 types thereof for Examples and 8 types thereof for Comparative Examples. Respective alloy compositions shown in Table 1 are defined so as to obtain target compositions shown in Tables 2 and 3 below.

First, each raw material shown in Table 1 was weighed out. The weighed raw materials were heated and melted by using a high frequency induction furnace to obtain molten alloys. Si alloy particles in the form of a powder were prepared from the molten alloys by a gas atomization method. Note that an argon atmosphere was used as an atmosphere during the preparation of the molten alloys and the gas atomization. In addition, during the gas atomization, a high-pressure (4 MPa) argon gas was sprayed onto the molten alloy falling like a rod in the atomization chamber. The obtained Si alloy particles were mechanically finely pulverized by using a wet bead mill to obtain a negative electrode material powder.

However, regarding Comparative Examples 5 and 6 in which the difference in particle diameter of respective phases was large, Si particles, SiX compound particles, and SnY compound particles were separately formed directly from respective molten metals, and these particles were pulverized to the respective predetermined particle diameter and then mixed to obtain a negative electrode material powder.

### [Table 1]

**Table 1**

| | | Chemical composition (mass%) | | | | | | | | |
|---|---|---|---|---|---|---|---|---|---|---|
| | | Si | Fe | Sn | Cu | Cr | Zr | Ni | Ti | Co |
| Ex. | 1 | 77.57 | 17.43 | 3.05 | 1.96 | - | - | - | - | - |
| | 2 | 87.53 | 7.47 | 3.05 | 1.96 | - | - | - | - | - |
| | 3 | 94.00 | 1.00 | 3.05 | 1.96 | - | - | - | - | - |
| | 4 | 52.67 | 42.33 | 3.05 | 1.96 | - | - | - | - | - |
| | 5 | 57.65 | 37.35 | 3.05 | 1.96 | - | - | - | - | - |
| | 6 | 62.63 | 32.37 | 3.05 | 1.96 | - | - | - | - | - |
| | 7 | 67.61 | 27.39 | 3.05 | 1.96 | - | - | - | - | - |
| | 8 | 72.59 | 22.41 | 3.05 | 1.96 | - | - | - | - | - |
| | 9 | 78.20 | - | 3.05 | 1.96 | 16.80 | - | - | - | - |
| | 10 | 73.34 | - | 3.05 | 1.96 | - | 21.67 | - | - | - |
| | 11 | 77.12 | - | 3.05 | 1.96 | - | | 17.89 | - | - |
| | 12 | 78.90 | - | 3.05 | 1.96 | - | | - | 16.10 | - |
| | 13 | 77.57 | 17.43 | 3.37 | - | - | - | - | 1.63 | - |
| | 14 | 77.57 | 17.43 | 4.01 | - | - | - | - | - | 1.00 |
| | 15 | 77.57 | 18.38 | 4.05 | - | - | - | - | - | - |
| | 16 | 77.57 | 17.43 | 3.65 | - | - | - | 1.36 | - | - |
| | 17 | 40.04 | 9.96 | 30.45 | 19.55 | - | - | - | - | - |
| | 18 | 60.04 | 9.96 | 18.27 | 11.73 | - | - | - | - | - |
| | 19 | 80.04 | 9.96 | 6.09 | 3.91 | - | - | - | - | - |
| | 20 | 89.04 | 9.96 | 0.61 | 0.39 | - | - | - | - | - |
| | 21 | 89.94 | 9.96 | 0.06 | 0.04 | - | - | - | - | - |
| | 22 | 77.57 | 17.43 | 3.05 | 1.96 | - | - | - | - | - |
| | 23 | 77.57 | 17.43 | 3.05 | 1.96 | - | - | - | - | - |
| | 24 | 77.57 | 17.43 | 3.05 | 1.96 | - | - | - | - | - |
| | 25 | 77.57 | 17.43 | 3.05 | 1.96 | - | - | - | - | - |
| | 26 | 77.57 | 17.43 | 3.05 | 1.96 | - | - | - | - | - |
| | 27 | 77.57 | 17.43 | 3.05 | 1.96 | - | - | - | - | - |
| Comp. Ex. | 1 | 98.50 | 0.50 | 0.61 | 0.39 | - | - | - | - | - |
| | 2 | 50.18 | 44.82 | 3.05 | 1.96 | - | - | - | - | - |
| | 3 | 30.04 | 9.96 | 36.54 | 23.46 | - | - | - | - | - |
| | 4 | 89.99 | 9.96 | 0.03 | 0.02 | - | - | - | - | - |
| | 5 | 77.57 | 17.43 | 3.05 | 1.96 | - | - | - | - | - |
| | 6 | 77.57 | 17.43 | 3.05 | 1.96 | - | - | - | - | - |
| | 7 | 77.57 | 17.43 | 3.05 | 1.96 | - | - | - | - | - |
| | 8 | 77.57 | 17.43 | 3.05 | 1.96 | - | - | - | - | - |

### 2. Preparation of Coin-type Battery for Charging and Discharging Test

Blended were 100 parts by mass of the prepared negative electrode material powder as a negative electrode active material, 6 parts by mass of Ketjen black (manufactured by Lion Corporation) as a conductive aid, and 19 parts by mass of a polyimide (thermoplastic resin) binder as a binder, and therewith was mixed N-methyl-2-pyrrolidone (NMP) as a solvent, to thereby prepare each paste containing each negative electrode material powder.

Each coin-type half cell was prepared as follows. Here, for sake of simple evaluation, an electrode prepared by using a negative electrode material powder was used as a test electrode, and a Li foil was used as a counter electrode. First, each paste was applied to a surface of a stainless steel (SUS) 316L foil (thickness: 20 µm) as a negative electrode current collector by using a doctor blade method so as to be 50 µm, followed by drying to form each negative electrode active material layer. After formation, the negative electrode active material layer was densified by roll pressing. Accordingly, test electrodes using negative electrode material powders according to Examples and Comparative Examples as negative electrode active materials were prepared.

Next, each of the test electrodes was punched into a disc shape having a diameter of 11 mm to obtain a test electrode.

Next, a Li foil (thickness: 500 µm) was punched into substantially the same shape as the test electrode to prepare a counter electrode. In addition, a non-aqueous electrolytic solution was prepared by dissolving LiPF₆ at a concentration of 1 mol/l in an equivalent mixed solvent of ethylene carbonate (EC) and diethyl carbonate (DEC) in terms of volume proportion.

Next, the test electrode was housed in a positive electrode can, and the counter electrode was housed in a negative electrode can, and a separator made of a polyolefin-based microporous film was disposed between the test electrode and the counter electrode. Note that the test electrode should be a negative electrode in a lithium ion battery, but in the case where a Li foil is used as the counter electrode, the Li foil is the negative electrode and the test electrode is the positive electrode.

Next, the above-described non-aqueous electrolytic solution was injected into both cans, and the negative electrode can and the positive electrode can were crimped and fixed to each other.

### 3. Evaluation on Negative Electrode Material Powder

### 3-1. Confirmation of Composition Phase of Negative Electrode Material Powder

The negative electrode material powder prepared in each of Examples and Comparative Examples was analyzed by XRD (X-ray diffraction) to confirm whether a Si phase, a SiX compound phase, and a SnY compound phase were included. Note that, for the XRD analysis, a Co tube was used and an angle range of 120° to 20° was measured.

### 3-2. Calculation of Proportions of Si Phase, SiX Compound Phase, and SnY Compound Phase

A method for calculating the proportions of the Si phase, the SiX compound phase, and the SnY compound phase shown in Tables 2 and 3 below is described with reference to Example 1 as an example.
(1) First, the composition phases in the prepared negative electrode material powder are confirmed. In the case of Example 1, as a result of the XRD analysis, Si, Si₂Fe, and Sn₅Cu₆ were confirmed.
(2) Si₂Fe is 50.1[Si]-49.9[Fe] in terms of ratio in mass%. Correspondingly, the amount of Si to be compound is 17.43 × 50.1/49.9 = 17.50%. Therefore, the proportion of the SiX compound phase (Si₂Fe) is the total of the amount of Si to be compound (17.50%) and the amount of Fe (17.43%) in Table 1, and is thus 35% in this example.
(3) The proportion of the Si phase is a value obtained by subtracting the amount of Si to be compound (17.50%) from the total amount of Si (77.57%) in Table 1, and is thus 60% in this example.
(4) The proportion of the SnY compound phase is the total of the amount of Sn (3.05%) and the amount of Cu (1.96%) in Table 1, and is thus 5% in this example.

### [Table 2]

**Table 2**

| | | Target composition phase | Type of SiX phase | Phase proportion (mass%) | | | Average particle diameter (µm) | | |
|---|---|---|---|---|---|---|---|---|---|
| | | | | Si | SiX | SnY | Si | SiX | SnY |
| | 1 | 60[Si]-35[Si₂Fe]-5[Sn₅Cu₆] | Si₂Fe | 60 | 35 | 5 | 6.5 | 7.3 | 7.4 |
| | 2 | 80[Si]-15[Si₂Fe]-5[Sn₅Cu₆] | Si₂Fe | 80 | 15 | 5 | 5.1 | 2.3 | 2.6 |
| | 3 | 93[Si]-2[Si₂Fe]-5[Sn₅Cu₆] | Si₂Fe | 93 | 2 | 5 | 4.2 | 1.7 | 1.7 |
| | 4 | 10[Si]-85[Si₂Fe]-5[Sn₅Cu₆] | Si₂Fe | 10 | 85 | 5 | 6.0 | 6.4 | 6.2 |
| | 5 | 20[Si]-75[Si₂Fe]-5[Sn₅Cu₆] | Si₂Fe | 20 | 75 | 5 | 2.6 | 4.5 | 4.7 |
| | 6 | 30[Si]-65[Si₂Fe]-5[Sn₅Cu₆] | Si₂Fe | 30 | 65 | 5 | 2.2 | 2.2 | 2.5 |
| | 7 | 40[Si]-55[Si₂Fe]-5[Sn₅Cu₆] | Si₂Fe | 40 | 55 | 5 | 8.6 | 9.0 | 13.9 |
| | 8 | 50[Si]-45[Si₂Fe]-5[Sn₅Cu₆] | Si₂Fe | 50 | 45 | 5 | 8.6 | 15.6 | 25.5 |
| | 9 | 60[Si]-35[Si₂Cr]-5[Sn₅Cu₆] | Si₂Cr | 60 | 35 | 5 | 3.6 | 3.5 | 3.8 |
| Ex. | 10 | 60[Si]-35[Si₂Zr]-5[Sn₅Cu₆] | Si₂Zr | 60 | 35 | 5 | 8.4 | 9.5 | 12.9 |
| | 11 | 60[Si]-35[Si₂Ni]-5[Sn₅Cu₆] | Si₂Ni | 60 | 35 | 5 | 9.4 | 8.6 | 13.7 |
| | 12 | 60[Si]-35[Si₂Ti]-5[Sn₅Cu₆] | Si₂Ti | 60 | 35 | 5 | 3.5 | 2.9 | 3.7 |
| | 13 | 60[Si]-35[Si₂Fe]-5[Sn₅Ti₆] | Si₂Fe | 60 | 35 | 5 | 7.6 | 6.1 | 11.1 |
| | 14 | 60[Si]-35[Si₂Fe]-5[Sn₂Co] | Si₂Fe | 60 | 35 | 5 | 2.0 | 3.3 | 2.0 |
| | 15 | 60[Si]-35[Si₂Fe]-5[Sn₂Fe] | Si₂Fe | 60 | 35 | 5 | 2.9 | 2.3 | 3.1 |
| | 16 | 60[Si]-35[Si₂Fe]-5[Ni₃Sn₄] | Si₂Fe | 60 | 35 | 5 | 9.3 | 7.2 | 15.4 |
| | 17 | 30[Si]-20[Si₂Fe]-50[Sn₅Cu₆] | Si₂Fe | 30 | 20 | 50 | 5.2 | 9.2 | 6.5 |
| | 18 | 50[Si]-20[Si₂Fe]-30[Sn₅Cu₆] | Si₂Fe | 50 | 20 | 30 | 4.2 | 12.0 | 6.3 |
| | 19 | 70[Si]-20[Si₂Fe]-10[Sn₅Cu₆] | Si₂Fe | 70 | 20 | 10 | 5.5 | 3.7 | 3.8 |
| | 20 | 79[Si]-20[Si₂Fe]-1[Sn₅Cu₆] | Si₂Fe | 79 | 20 | 1 | 4.7 | 2.4 | 2.3 |

**Table 2 (Continued)**

| | | Average particle diameter ratio | | Initial Coulombic efficiency | Initial discharge capacity | Cycle characteristics | Comprehensive determination |
|---|---|---|---|---|---|---|---|
| | | Si/SiX | Si/SnY | | | | |
| | 1 | 0.9 | 0.9 | AA | AA | AA | Passed |
| | 2 | 2.2 | 1.9 | AA | AA | AA | Passed |
| | 3 | 2.4 | 2.4 | A | AA | C | Passed |
| | 4 | 0.9 | 1.0 | C | C | AA | Passed |
| | 5 | 0.6 | 0.5 | C | C | AA | Passed |
| | 6 | 1.0 | 0.9 | AA | AA | AA | Passed |
| | 7 | 1.0 | 0.6 | AA | AA | AA | Passed |
| | 8 | 0.6 | 0.3 | AA | AA | AA | Passed |
| | 9 | 1.0 | 1.0 | AA | AA | AA | Passed |
| Ex. | 10 | 0.9 | 0.6 | AA | AA | AA | Passed |
| | 11 | 1.1 | 0.7 | AA | AA | AA | Passed |
| | 12 | 1.2 | 0.9 | AA | AA | AA | Passed |
| | 13 | 1.2 | 0.7 | A | A | A | Passed |
| | 14 | 0.6 | 1.0 | A | A | A | Passed |
| | 15 | 1.3 | 0.9 | A | A | A | Passed |
| | 16 | 1.3 | 0.6 | A | A | A | Passed |
| | 17 | 0.6 | 0.8 | C | C | AA | Passed |
| | 18 | 0.3 | 0.7 | AA | AA | AA | Passed |
| | 19 | 1.5 | 1.5 | AA | AA | AA | Passed |
| | 20 | 2.0 | 2.0 | AA | AA | AA | Passed |

### [Table 3]

**Table 3**

| | | Target composition phase | Type of SiX phase | Phase proportion (mass%) | | | Average particle diameter (µm) | | |
|---|---|---|---|---|---|---|---|---|---|
| | | | | Si | SiX | SnY | Si | SiX | SnY |
| Ex. | 21 | 79.9[Si]-20[Si₂Fe]-0.1[Sn₅Cu₆] | Si₂Fe | 79.9 | 20 | 0.1 | 4.4 | 2.0 | 1.9 |
| | 22 | 60[Si]-35[Si₂Fe]-5[Sn₅Cu₆] | Si₂Fe | 60 | 35 | 5 | 5.6 | 11.1 | 8.8 |
| | 23 | 60[Si]-35[Si₂Fe]-5[Sn₅Cu₆] | Si₂Fe | 60 | 35 | 5 | 7.6 | 25.3 | 25.3 |
| | 24 | 60[Si]-35[Si₂Fe]-5[Sn₅Cu₆] | Si₂Fe | 60 | 35 | 5 | 2.3 | 22.9 | 22.9 |
| | 25 | 60[Si]-35[Si₂Fe]-5[Sn₅Cu₆] | Si₂Fe | 60 | 35 | 5 | 8.8 | 3.7 | 4.2 |
| | 26 | 60[Si]-35[Si₂Fe]-5[Sn₅Cu₆] | Si₂Fe | 60 | 35 | 5 | 7.4 | 2.5 | 2.5 |
| | 27 | 60[Si]-35[Si₂Fe]-5[Sn₅Cu₆] | Si₂Fe | 60 | 35 | 5 | 8.8 | 1.8 | 1.8 |
| Comp. Ex. | 1 | 98[Si]-1[Si₂Fe]-1[Sn₅Cu₆] | Si₂Fe | 98 | 1 | 1 | 9.1 | 1.5 | 1.6 |
| | 2 | 5[Si]-90[Si₂Fe]-5[Sn₅Cu₆] | Si₂Fe | 5 | 90 | 5 | 1.4 | 16.1 | 15.7 |
| | 3 | 20[Si]-20[Si₂Fe]-60[Sn₅Cu₆] | Si₂Fe | 20 | 20 | 60 | 8.9 | 8.1 | 6.6 |
| | 4 | 79.95[Si]-20[Si₂Fe]-0.05[Sn₅Cu₆] | Si₂Fe | 80 | 20 | 0.05 | 1.9 | 1.7 | 2.1 |
| | 5 | 60[Si]-35[Si₂Fe]-5[Sn₅Cu₆] | Si₂Fe | 60 | 35 | 5 | 1.2 | 14.6 | 21.4 |
| | 6 | 60[Si]-35[Si₂Fe]-5[Sn₅Cu₆] | Si₂Fe | 60 | 35 | 5 | 12.8 | 1.1 | 1.6 |
| | 7 | 60[Si]-35[Si₂Fe]-5[Sn₅Cu₆] | Si₂Fe | 60 | 35 | 5 | 70.0 | 60.9 | 67.3 |
| | 8 | 60[Si]-35[Si₂Fe]-5[Sn₅Cu₆] | Si₂Fe | 60 | 35 | 5 | 0.06 | 0.05 | 0.07 |

**Table 3 (Continued)**

| | | Average particle diameter ratio | | Initial Coulombic efficiency | Initial discharge capacity | Cycle characteristics | Comprehensive determination |
|---|---|---|---|---|---|---|---|
| | | Si/SiX | Si/SnY | | | | |
| Ex. | 21 | 2.2 | 2.3 | AA | AA | AA | Passed |
| | 22 | 0.5 | 0.6 | AA | AA | AA | Passed |
| | 23 | 0.3 | 0.3 | AA | AA | AA | Passed |
| | 24 | 0.10 | 0.10 | A | A | AA | Passed |
| | 25 | 2.4 | 2.1 | AA | AA | AA | Passed |
| | 26 | 3.0 | 3.0 | AA | AA | AA | Passed |
| | 27 | 5.0 | 5.0 | AA | AA | A | Passed |
| Comp. Ex. | 1 | 5.9 | 5.5 | A | AA | D | Failed |
| | 2 | 0.08 | 0.09 | D | D | AA | Failed |
| | 3 | 1.1 | 1.3 | D | D | AA | Failed |
| | 4 | 1.2 | 0.9 | AA | AA | D | Failed |
| | 5 | 0.08 | 0.06 | D | D | AA | Failed |
| | 6 | 11.7 | 7.8 | AA | AA | D | Failed |
| | 7 | 1.2 | 1.0 | AA | AA | D | Failed |
| | 8 | 1.1 | 0.9 | D | D | AA | Failed |

### 3-3. Calculation of Average Particle Diameter and Average Particle Diameter Ratio of Negative Electrode Material Powder

It was confirmed by an SEM image that in the obtained negative electrode material powder, the Si phase, the SiX compound phase, and the SnY compound phase were separately present in a separate state. In addition, particle diameters (diameters of equivalent circle) of randomly selected 100 particles of each of the Si phase, the SiX compound phase, and the SnY compound phase that were present separately in separate state were measured from a cross-sectional SEM image (magnification: 5000 times) of powders thereof, the average values thereof were defined as the average particle diameters mdSi, mdSiX, and mdSnY, respectively. In addition, the average particle diameter ratios expressed by mdSi/mdSiX and mdSi/mdSnY were calculated. The results are shown in Tables 2 and 3. Note that, in Tables 2 and 3, the average particle diameters mdSi, mdSiX, and mdSnY are respectively shown as Si, SiX, and SnY in "Average particle diameter (µm)", and the average particle diameter ratios expressed by mdSi/mdSiX and mdSi/mdSnY are respectively shown as Si/SiX and Si/SnY in "Average particle diameter ratio".

### 3-4. Charging and Discharging Test

One cycle including constant current charging and discharging at a current value of 0.2 mA was performed by using the prepared coin-type battery. The initial discharge capacity C₀ (mAh/g) was calculated based on the value obtained by dividing the capacity (mAh) used for releasing Li by the amount (g) of the active material. In addition, the ratio of the discharge capacity to the charge capacity in the above-mentioned charging and discharging cycle was evaluated as a percentage of discharge capacity/charge capacity, and was defined as the initial Coulombic efficiency (%).

Regarding determination on the initial discharge capacity (mAh/g), the case of more than 400 and 500 or less was evaluated as "AA", the case of more than 350 and 400 or less was evaluated as "A", the case of more than 300 and 350 or less was evaluated as "B", the case of more than 250 and 300 or less was evaluated as "C", and the case of 250 or less was evaluated as "D". The results are shown in Tables 2 and 3.

Regarding determination on the initial Coulombic efficiency, the case of more than 95% was evaluated as "AA", the case of more than 80% and 95% or less was evaluated as "A", the case of more than 70% and 80% or less was evaluated as "B", the case of more than 60% and 70% or less was evaluated as "C", and the case of 60% or less was evaluated as "D". The results are shown in Tables 2 and 3.

In the second cycle and thereafter in the charging and discharging test, the charging and discharging test was performed at a 1/5C rate. Here, in the C rate, the current value for (charging and) discharging an amount of electricity C₀ required to (charge and) discharging the electrode in 1 hour is defined as 1C. That is, 5C means (charging and) discharging in 12 minutes, and 1/5C means (charging and) discharging in 5 hours. Then, the cycle characteristics were evaluated by performing the charging and discharging cycle 100 times. A capacity retention rate (discharge capacity after 100 cycles/initial discharge capacity (discharge capacity at first cycle) × 100) was obtained from each of the obtained discharge capacities. Regarding determination on the capacity retention rate, the case of more than 70% was evaluated as "AA", the case of more than 50% and 70% or less was evaluated as "A", the case of more than 40% and 50% or less was evaluated as "B", the case of more than 30% and 40% or less was evaluated as "C", and the case of 30% or less was evaluated as "D". The results are shown in Tables 2 and 3.

In addition, the comprehensive determination shown in Tables 2 and 3 is based on the evaluation results of the initial Coulombic efficiency, the initial discharge capacity, and the cycle characteristics. Specifically, for each of Examples and Comparative Examples, the case where there was no evaluation of "D" in the above three types of characteristic evaluation was defined as "Passed", and the case where there was evaluation of "D" in any of the above three types of characteristic evaluation was defined as "Failed".

The results in Tables 2 and 3 obtained as described above show the followings.

Comparative Example 1 is an example in which the proportion of the Si phase in the negative electrode material powder was more than the upper limit (95%), and the average particle diameter ratios (mdSi/mdSiX and mdSi/mdSnY) were larger than the upper limit (5.0), and the cycle characteristics were evaluated as "D".

Comparative Example 2 is an example in which the proportion of the Si phase in the negative electrode material powder was lower than the lower limit (10%), and the average particle diameter ratios (mdSi/mdSiX and mdSi/mdSnY) were smaller than the lower limit (0.1), and the initial Coulombic efficiency and the initial discharge capacity were evaluated as "D".

In Comparative Example 3, the proportion of the SnY compound phase was more than the upper limit (50%), and the initial Coulombic efficiency and the initial discharge capacity were evaluated as "D".

In Comparative Example 4, the proportion of the SnY compound phase was lower than the lower limit (0.07%), and the cycle characteristics were evaluated as "D".

In Comparative Example 5, the average particle diameter ratios (mdSi/mdSiX and mdSi/mdSnY) were smaller than the lower limit (0.1), and the initial Coulombic efficiency and the initial discharge capacity were evaluated as "D".

In Comparative Example 6, the average particle diameter ratios (mdSi/mdSiX and mdSi/mdSnY) were larger than the upper limit (5.0), and the cycle characteristics were evaluated as "D".

In Comparative Example 7, the average particle diameters mdSi, mdSiX, and mdSnY were larger than the upper limit (50 µm), and the cycle characteristics were evaluated as "D".

In Comparative Example 8, the average particle diameters mdSi, mdSiX, and mdSnY were smaller than the lower limit (0.1 µm), and the initial Coulombic efficiency and the initial discharge capacity were evaluated as "D".

As described above, in all Comparative Examples, the initial Coulombic efficiency, the initial discharge capacity or the cycle characteristics were evaluated as D, and the battery characteristics in consideration of the initial characteristics and the cycle characteristics have not been sufficiently improved.

In contrast, in each Example in which the proportions of the Si phase, the SiX compound phase, and the SnY compound phase in the negative electrode material powder were adjusted within a predetermined range, the average particle diameters mdSi, mdSiX, and mdSnY of the Si phase, SiX compound phase, and SnY compound phase that were present independently were all within the range of 0.1 µm to 50 µm, and the average particle diameter ratios expressed by mdSi/mdSiX and mdSi/mdSnY were both within the range of 0.1 to 5.0, there was no particularly low "D" evaluation, and the battery characteristics in consideration of the initial Coulombic efficiency, the initial discharge capacity, and the cycle characteristics are improved.

When Example 1 to Example 8 in which the proportions of the Si phase and the SiX compound phase were changed are compared, it can be seen that in Examples 1, 2, 6, 7, and 8 in which the proportion of the Si phase was in the range of 30% to 90% and the proportion of the SiX compound phase was in the range of 1% to 70%, each characteristic was improved in a well-balanced manner.

In addition, when Examples 1, 13, 14, 15, and 16 in which the element Y was different are compared, particularly good evaluation was obtained in the case where the element Y was Cu and the SnY compound was a SnCu compound. Here, when Example 17 to Example 21 in which the proportion of the SnY compound phase was changed are compared, it can be seen that the proportion of the SnY compound phase is preferably within the range of 0.07% to 30%.

Example 22 to Example 27 have different average particle diameter ratios (mdSi/mdSiX and mdSi/mdSnY). It can be seen that each characteristic is improved in a well-balanced manner in the case where the average particle diameter ratio is within the range of 0.3 to 3.0.

Although the negative electrode material powder for lithium ion battery and the lithium ion battery according to the present invention have been described in detail above, the present invention is not limited to the above-described embodiment and Examples. For example, the negative electrode material powder according to the present invention can be applied not only to a negative electrode material powder for a liquid lithium ion battery as in the above embodiment, but also to a negative electrode material powder for an all-solid lithium ion battery. Various modifications can be made to the present invention without departing from the gist.

The present application is based on Japanese patent application No. 2021-161675 filed on September 30, 2021, and the contents thereof are incorporated herein as reference.

## Claims

1. A negative electrode material powder (3) for a lithium ion battery,
comprising Si, Sn, an element X, and an element Y, and
comprising a Si phase (3a), a SiX compound phase (3b), and a SnY compound phase (3c) in a phase proportion expressed by the following formula {1},
wherein
the Si phase (3a), the SiX compound phase (3b), and the SnY compound phase (3c) are present separately in a separate state, and
when particle diameters of the Si phase (3a), the SiX compound phase (3b), and the SnY compound phase (3c) at an integrated value of 50% in a respective particle diameter distribution are respectively defined as average particle diameters mdSi, mdSiX, and mdSnY for the respective phase as determined in accordance with the method described in the description, and
the average particle diameters mdSi, mdSiX, and mdSnY are all within a range of 0.1 µm to 50 µm, **characterized in that**
average particle diameter ratios expressed by mdSi/mdSiX and mdSi/mdSnY are both within a range of 0.1 to 5.0,
a[Si]-b[SiX]-c[SnY] formula {1}
the element X is at least one element selected from the group consisting of Fe, Ni, Cr, Zr, and Ti,
the element Y is at least one element selected from the group consisting of Cu, Fe, Ni, Cr, Co, Mn, Zr, and Ti, and
in the formula (1), a, b, and c respectively indicate a content (mass%) of the Si phase, the SiX compound phase, and the SnY compound phase, a+b+c = 100, 10 ≤ a ≤ 95, 1 ≤ b ≤ 90, and 0.07 ≤ c ≤ 50.

2. The negative electrode material powder (3) for a lithium ion battery according to claim 1, wherein a, b, and c in the formula {1} satisfy 30 ≤ a ≤ 90, 1 ≤ b ≤ 70, and 0.1 ≤ c ≤ 30.

3. The negative electrode material powder (3) for a lithium ion battery according to claim 1, wherein
the element Y is Cu, and
a, b, and c in the formula {1} satisfy 30 ≤ a ≤ 90, 1 ≤ b ≤ 70, and 0.1 ≤ c ≤ 30.

4. The negative electrode material powder (3) for a lithium ion battery according to any one of claims 1 to 3, wherein the average particle diameter ratios expressed by mdSi/mdSiX and mdSi/mdSnY are both within a range of 0.3 to 3.0.

5. A lithium ion battery comprising a negative electrode, wherein the negative electrode comprises a negative electrode containing the negative electrode material powder (3) according to any one of claims 1 to 4.

6. The lithium ion battery according to claim 5, further comprising a positive electrode, an electrolyte, and a separator.

7. The lithium ion battery according to claim 6, further comprising a can and a gasket.

8. The lithium ion battery according to any one of claims 5 to 7, wherein a shape of the battery is a cylindrical shape, a rectangular shape, or a coin shape.

9. Use of the negative electrode material powder (3) according to any one of claims 1 to 4, for manufacturing the lithium ion battery according to any one of claims 5 to 8.

10. The use according to claim 9, comprising pulverizing Si alloy particles (1) to provide the electrode material powder (3).

## Patentansprüche

1. Negative-Elektrode-Materialpulver (3) für eine Lithiumionenbatterie, umfassend Si, Sn, ein Element X und ein Element Y, und
umfassend eine Si-Phase (3a), eine SiX-Verbindungsphase (3b) und eine SnY- Verbindungsphase (3c) in einem durch die folgende Formel {1} ausgedrückten Phasenverhältnis, wobei
die Si-Phase (3a), die SiX-Verbindungsphase (3b) und die SnY- Verbindungsphase (3c) getrennt voneinander in einem separaten Zustand vorliegen, und
wenn Partikeldurchmesser der Si-Phase (3a), der SiX-Verbindungsphase (3b) und der SnY- Verbindungsphase (3c) bei einem integrierten Wert von 50% in einer jeweiligen Partikeldurchmesser-Verteilung jeweils als durchschnittliche Partikeldurchmesser mdSi, mdSiX bzw. mdSnY für die jeweilige Phase wie gemäß dem in der Beschreibung beschriebenen Verfahren bestimmt definiert werden, und
die durchschnittlichen Partikeldurchmesser mdSi, mdSiX und mdSnY alle innerhalb eines Bereichs von 0,1 µm bis 50 µm liegen,
**dadurch gekennzeichnet, dass**
durch mdSi/mdSiX und mdSi/mdSnY ausgedrückte Durchschnittlicher-Partikeldurchmesser-Verhältnisse beide innerhalb von 0,1 bis 5,0 liegen,
a[Si]-b[SiX]-c[SnY] Formel {1}
das Element X wenigstens ein aus derjenigen Gruppe ausgewähltes Element ist, die aus Fe, Ni, Cr, Zr und Ti besteht,
das Element Y wenigstens ein aus derjenigen Gruppe ausgewähltes Element ist, die aus Cu, Fe, Ni, Cr, Co, Mn, Zr und Ti besteht, und
wenn in der Formel (1) a, b bzw. c jeweils einen Gehalt (in Massen%) der Si-Phase, der SiX-Verbindungsphase bzw. der SnY-Verbindungsphase angeben, a+b+c = 100, 10 ≤ a ≤ 95, 1 ≤ b ≤ 90 und 0.07 ≤ c ≤ 50.

2. Negative-Elektrode-Materialpulver (3) für eine Lithiumionenbatterie gemäß Anspruch 1, wobei a, b und c in der Formel {1} 30 ≤ a ≤ 90, 1 ≤ b ≤ 70, and 0,1 ≤ c ≤ 30 erfüllen.

3. Negative-Elektrode-Materialpulver (3) für eine Lithiumionenbatterie gemäß Anspruch 1, wobei
das Element Y Cu ist, und
a, b und c in der Formel {1} 30 ≤ a ≤ 90, 1 ≤ b ≤ 70, und 0,1 ≤ c ≤ 30 erfüllen.

4. Negative-Elektrode-Materialpulver (3) für eine Lithiumionenbatterie gemäß einem der Ansprüche 1 bis 3, wobei die durch mdSi/mdSiX und mdSi/mdSnY dargestellten Durchschnittlicher-Partikeldurchmesser-Verhältnisse beide innerhalb eines Bereichs von 0,3 bis 3,0 liegen.

5. Lithiumionenbatterie umfassend eine negative Elektrode, wobei die negative Elektrode eine negative umfasst, die das Negative-Elektrode-Materialpulver (3) gemäß einem der Ansprüche 1 bis 4 enthält.

6. Lithiumionenbatterie gemäß Anspruch 5, ferner umfassend eine positive Elektrode, einen Elektrolyten und einen Separator.

7. Lithiumionenbatterie gemäß Anspruch 6, ferner umfassend eine Dose und eine Dichtung.

8. Lithiumionenbatterie gemäß einem der Ansprüche 5 bis 7, wobei eine Gestalt der Batterie eine zylindrische Gestalt, eine rechteckige Gestalt oder eine Münzengestalt ist.

9. Verwendung des Negative-Elektrode-Materialpulvers (3) gemäß einem der Ansprüche 1 bis 4, zum Herstellen der Lithiumionenbatterie gemäß einem der Ansprüche 5 bis 8.

10. Verwendung gemäß Anspruch 9, umfassend Pulverisieren von Si-Legierungspartikeln (1) zum Bereitstellen des Elektrodenmaterialpulvers (3).

## Revendications

1. Poudre de matériau d'électrode négative (3) destinée à une batterie lithium-ion, comprenant Si, Sn, un élément X et un élément Y, et
comprenant une phase Si (3a), une phase composée SiX (3b) et une phase composée SnY (3c) dans une proportion de phases exprimée par la formule {1} suivante,
dans laquelle
la phase Si (3a), la phase composée SiX (3b) et la phase composée SnY (3c) sont présentes séparément dans un état séparé, et
lorsque les diamètres particulaires de la phase Si (3a), de la phase composée SiX (3b) et de la phase composée SnY (3c) à une valeur intégrée de 50 % dans une distribution de diamètres particulaires respective sont respectivement définis en tant que diamètres particulaires moyens mdSi, mdSiX et mdSnY pour la phase respective tels que déterminés conformément au procédé décrit dans la description, et
les diamètres particulaires moyens mdSi, mdSiX et mdSnY sont tous au sein d'une plage de 0,1 µm à 50 µm, **caractérisée en ce que**
les rapports de diamètres particulaires moyens exprimés par mdSi/mdSiX et mdSi/mdSnY sont l'un et l'autre au sein d'une plage de 0,1 à 5,0,
a[Si]-b[SiX]-c[SnY] formule {1}
l'élément X est au moins un élément choisi dans le groupe constitué de Fe, Ni, Cr, Zr et Ti,
l'élément Y est au moins un élément choisi dans le groupe constitué de Cu, Fe, Ni, Cr, Co, Mn, Zr et Ti, et
dans la formule (1), a, b et c indiquent respectivement une teneur (% en masse) de la phase Si, de la phase composée SiX et de la phase composée SnY, a+b+c = 100, 10 ≤ a ≤ 95, 1 ≤ b ≤ 90, et 0,07 ≤ c ≤ 50.

2. Poudre de matériau d'électrode négative (3) destinée à une batterie lithium-ion selon la revendication 1, dans laquelle a, b et c dans la formule {1} respectent 30 ≤ a ≤ 90, 1 ≤ b ≤ 70, et 0,1 ≤ c ≤ 30.

3. Poudre de matériau d'électrode négative (3) destinée à une batterie lithium-ion selon la revendication 1, dans laquelle l'élément Y est Cu, et
a, b et c dans la formule {1} respectent 30 ≤ a ≤ 90, 1 ≤ b ≤ 70, et 0,1 ≤ c ≤ 30.

4. Poudre de matériau d'électrode négative (3) destinée à une batterie lithium-ion selon l'une quelconque des revendications 1 à 3, dans laquelle les rapports de diamètres particulaires moyens exprimés par mdSi/mdSiX et mdSi/mdSnY sont l'un et l'autre au sein d'une plage de 0,3 à 3,0.

5. Batterie lithium-ion comprenant une électrode négative, dans laquelle
l'électrode négative comprend une électrode négative contenant la poudre de matériau d'électrode négative (3) selon l'une quelconque des revendications 1 à 4.

6. Batterie lithium-ion selon la revendication 5, comprenant en outre une électrode positive, un électrolyte et un séparateur.

7. Batterie lithium-ion selon la revendication 6, comprenant en outre un boîtier et un joint d'étanchéité.

8. Batterie lithium-ion selon l'une quelconque des revendications 5 à 7, dans laquelle une forme de la batterie est une forme cylindrique, une forme rectangulaire, ou une forme de pièce de monnaie.

9. Utilisation de la poudre de matériau d'électrode négative (3) selon l'une quelconque des revendications 1 à 4, pour la fabrication de la batterie lithium-ion selon l'une quelconque des revendications 5 à 8.

10. Utilisation selon la revendication 9, comprenant la pulvérisation de particules d'alliage de Si (1) pour fournir la poudre de matériau d'électrode (3).
